# EUROPÄISCHE PATENTANMELDUNG

(11) **EP 1 085 691 A2**
(43) Veröffentlichungstag der Anmeldung: **21.03.2001**
(21) Anmeldenummer: 00116835.0
(22) Anmeldetag: 04.08.2000
(51) Int. Cl.: H04L 12/10, H04L 12/40

(54) **System zur prozessorgesteuerten Übertragung von elektrischen Signalen und elektrischer Energie innerhalb eines militärischen Fahrzeugs**

(30) Priorität: 15.09.1999 DE 19944132
(71) Anmelder: Krauss-Maffei Wegmann GmbH & Co. KG, 34127 Kassel (DE)
(72) Erfinder: Tietze, Werner, 82166 Gräfelfing (DE); Schabl, Hans, 81245 München (DE)
(74) Vertreter: Feder, Wolf-Dietrich, Dr. Dipl.-Phys.

(57) **Zusammenfassung**

Ein System zur prozessorgesteuerten Übertragung von elektrischen Signalen und elektrischer Energie innerhalb eines militärischen Fahrzeugs. Es sind mehrere Verbraucher (4, 5) über ein Bus-System (2), das in eine zentrale Verteilereinheit (1) integriert ist, miteinander und mit einer zentralen Energieversorgungseinheit verbunden. Die Energieversorgung erfolgt ebenfalls über die zentrale Verteilereinheit (1), und die Verbraucher (4, 5) sind sternförmig über kombinierte Daten- und Versorgungsleitungen entweder direkt oder über ein gemeinsames Knotenelement (6) an das Bus-System (2) angeschlossen. In vorteilhafter Weise dient als Bus-System (2) ein CAN-Bus und die Verbraucher (4, 5) sind über Datenleitungen, die im gleichen Kabel wie die Versorgungsleitungen enthalten sind, an den CAN-Bus (2) angeschlossen.

## Beschreibung

Die Erfindung betrifft ein System zur prozessorgesteuerten Übertragung von elektrischen Signalen und elektrischer Energie innerhalb eines militärischen Fahrzeugs, bei dem mehrere Verbraucher über ein Bus-System und eine zentrale Verteilereinheit miteinander und mit einer zentralen Energieversorgungseinheit verbunden sind.

Beim Einsatz von Bus-Systemen in der elektrischen Ausstattung von militärischen Fahrzeugen ist eines der wichtigsten zu lösenden Probleme die geringe Ausfallsicherung von Bus-Systemen bei Zerstörung durch Fremdeinwirkung. Ein weiterer Nachteil von Bus-Systemen ist der hohe elektromechanische Aufwand für die notwendige Verkabelung entsprechend den geforderten militärischen Normen und Richtlinien.

Im militärischen Bereich wurden bisher Systeme zur Übertragung von elektrischen Signalen und elektrischer Energie in konventioneller Elektrik realisiert.

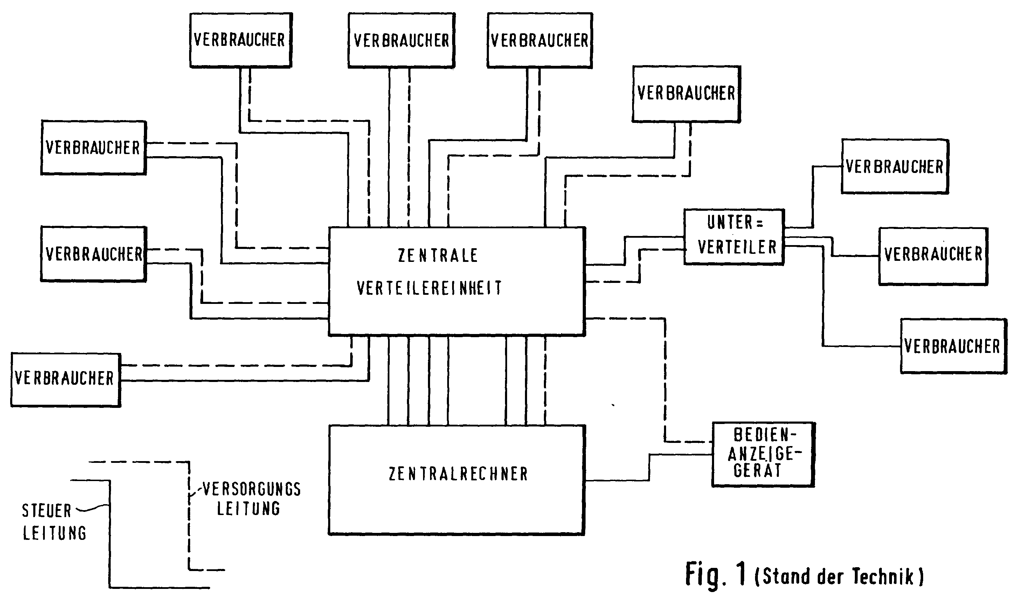

Ein solches bekanntes System ist beispielsweise in Fig. 1 der beigefügten Zeichnungen dargestellt. Alle Verbraucher sind bei diesem System über diskrete Steuerleitungen und diskrete Versorgungsleitungen an die zentrale Verteilereinheit angeschlossen, die von einem Zentralrechner aus gesteuert wird. Einige der Verbraucher können dabei über einzelne Unterverteiler zusammengefaßt sein.

Die Vorteile eines solchen Systems liegen darin, daß es sich um eine erprobte Technik im militärischen Bereich handelt, daß einfache konventionelle Verbraucher verwendbar sind und daß eine relativ gute Ausfallsicherheit besteht, da die Zerstörung eines Kabels nur Einfluß auf die betroffene Komponente hat. Die Zerstörung des Zentralverteilers hat allerdings sofort Einfluß auf das Gesamtsystem.

Die Nachteile dieses bekannten Systems liegen in einem hohen Verkabelungsaufwand, da viele Kabel mit vielen Leitungen notwendig sind, sowie in einer hohen Komplexität in der zentralen Verteilereinheit und einem hohen Aufwand bei der Fehlerlokalisierung.

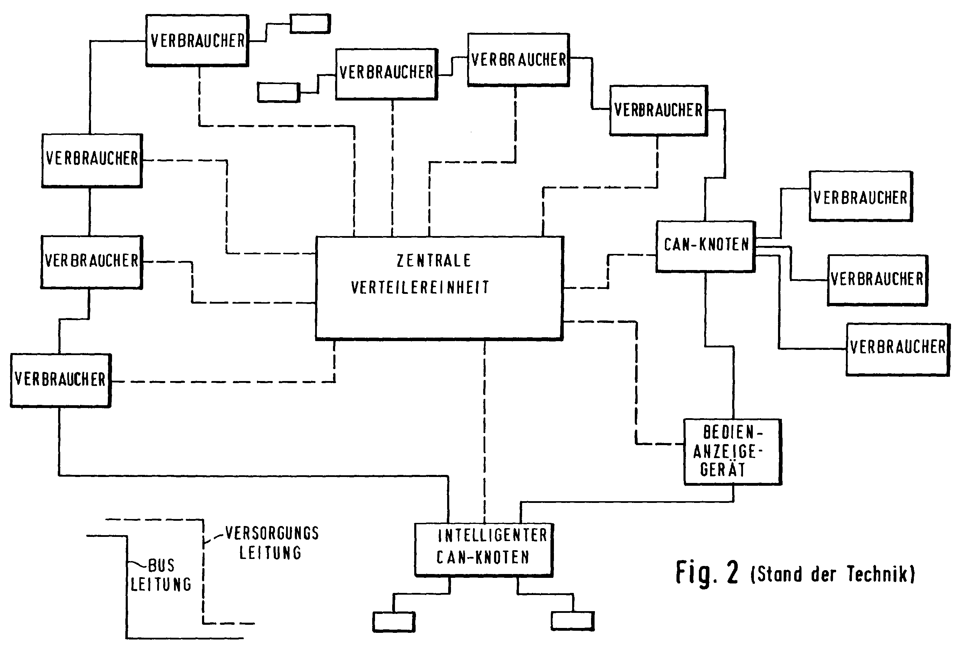

Ein weiteres, bisher im zivilen Bereich eingesetztes System ist in Fig. 2 der Zeichnungen dargestellt. Dieses System beruht auf der im KFZ-Bereich eingesetzten CAN-Bus-Technologie.

Bei diesem System sind alte Verbraucher und die Bedien/Anzeige-Geräte entweder direkt oder über einen CAN-Knoten an den CAN-Bus und über Versorgungsleitungen an die zentrale Verteilereinheit angeschlossen. Der CAN-Bus ist in mehrere gestreckte Segmente aufgeteilt, die zentral an einen intelligenten CAN-Knoten angeschlossen sind. Die Betriebsartenlogik und die Fehlerlokalisierung können dezentral oder durch einen intelligenten CAN-Knoten gesteuert werden.

Der Vorteil dieses Systems besteht darin, daß es sich um eine erprobte Technik im zivilen Bereich handelt, daß Standardkomponenten aus dem KFZ-

Bereich einsetzbar sind, daß eine einfache Fehlerlokalisierung möglich ist und komplexe Funktionen und beliebige Erweiterungen des Systems möglich sind. Nachteile liegen darin, daß eine Verkabelung nach militärischen Normen aufwendig ist, da die Versorgungskabel normal ausgeführt werden und Extrasteuerleitungen nötig sind. Weiterhin ist die Ausfallsicherheit bei Zerstörung der Bus-Leitungen durch Fremdeinwirkung gering, da eine Zerstörung der Kabel sofort Einfluß auf das Gesamtsystem hat. Das gleiche gilt bei der Zerstörung der zentralen Verteilereinheit.

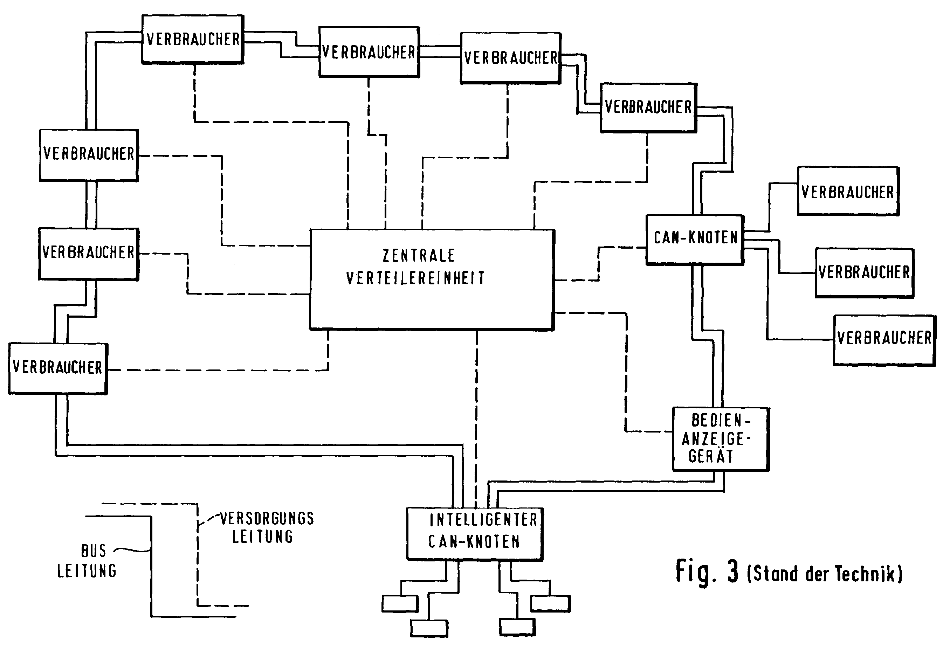

Die Ausfallsicherheit kann erhöht werden, indem ein System mit redundanten Bus-Leitungen eingesetzt wird, wie es beispielsweise in Fig. 3 der Zeichnungen dargestellt ist.

Bei diesem System sind alle Verbraucher und die Bedien/Anzeige-Geräte wiederum entweder direkt oder über einen CAN-Knoten an den CAN-Bus und über Versorgungsleitungen an die zentrale Verteilereinheit angeschlossen. Der CAN-Bus ist in zwei gestreckte Segmente aufgeteilt, die ringförmig angeordnet sind. Die Betriebsartenlogik und die Fehlerlokalisierung können dezentral oder durch einen intelligenten CAN-Knoten gesteuert werden. Jeder Teilnehmer ist an beide Segmente des CAN-Bus gleichzeitig angeschlossen. Bei Zerstörung durch Fremdeinwirkung kann die Kommunikation, gesteuert durch die einzelnen Verbraucher, über den zweiten Ring aufrechterhalten werden.

Die Vorteile eines solchen Systems liegen in einer relativ hohen Ausfallsicherheit bei Zerstörung einer Bus-Leitung durch Fremdeinwirkung, in einer einfachen Fehlerlokalisierung und in der Möglichkeit komplexer Funktionen und einer beliebigen Erweiterung des Systems durch einfachen Anschluß zusätzlicher Busteilnehmer. Die Nachteile bestehen in einer nach militärischen Normen aufwendigen Verkabelung, einem höheren Aufwand bei den CAN-Bus-Teilnehmern, bezüglich Hardware und Software, einem hohen Aufwand bei der Fehlererkennung und Fehlerbehebung am CAN-Bus. Es sind keine Standardkomponenten einsetzbar. Daher ist eine Verwendung von Adaptern notwendig und bei Zerstörung mehrerer Bus-Leitungen besteht nur noch eine geringe Ausfallsicherheit. Weiterhin ist diese Technik weder im zivilen noch im militärischen Bereich erprobt.

Der Erfindung liegt die Aufgabe zugrunde, ein System der eingangs und im Oberbegriff des Patentanspruchs 1 angegebenen Bauart zu schaffen, mit dem eine hohe Ausfallsicherheit bei Zerstörung der einzelnen Komponenten durch Fremdeinwirkung erreicht wird, bei dem aber andererseits die einzelnen Komponenten und die Verkabelung nur geringen Aufwand und damit geringe Kosten verursachen.

Die Lösung geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, das Bus-System insbesondere in einer Ausbildung als CAN-Bus in die zentrale Verteilereinheit zu integrieren und somit ausgedehnte Steuerleitungen zu vermeiden und die Verbraucher sternförmig über verlängerte Stichleitungen, die im selben Kabel wie die Versorgungsleitungen geführt werden, an den Bus anzuschließen. Dabei können die Teilnehmer entweder direkt oder über ein gemeinsames Knotenelement an das Bus-System angeschlossen sein. Die Betriebsartenlogik und die Fehlerlokalisierung können dezentral oder durch ein intelligentes Knotenelement, insbesondere einen intelligenten CAN-Knoten gesteuert werden.

Bei Zerstörung einer Leitung durch Fremdeinwirkung ist die Kommunikation zu den anderen Verbrauchern nicht gestört.

Das erfindungsgemäße System besitzt eine Reihe von Vorteilen gegenüber den bekannten Systemen.

Es ist eine einfache Verkabelung nach militärischen Normen möglich. Hierbei wird nur ein Kabel mit normalem Mil-Steckern pro Busteilnehmer benötigt. Das System besitzt eine hohe Ausfallsicherheit bei Zerstörung der Bus-Leitungen durch Fremdeinwirkung. Dabei können sogar mehrere Leitungen entfallen. Es sind immer nur die entsprechenden Teilfunktionen, niemals aber die Gesamtfunktion des Systems betroffen. Der Aufwand für die Schaffung der Redundanz ist gering, da der Zusatzaufwand nur die normgerechte Realisierung der langen Stichleitungen betrifft. Es ist eine einfache Fehlerlokalisierung möglich durch intelligente Busteilnehmer mit eigener Überwachungseinrichtung. Komplexe Funktionen und beliebige Erweiterungen des Systems sind möglich durch einfachen Anschluß zusätzlicher Busteilnehmer. Bei Ausbildung des Bus-Systems als CAN-Bus und Anschluß von Verbrauchern an den CAN-Bus über CAN-Knoten ergibt sich ein weiterer Vorteil, der insbesondere die Ausfallsicherheit erhöht. Die CAN-Knoten können alle völlig identisch aufgebaut werden und dies hat zur Folge, das sie jederzeit gegeneinander ausgetauscht werden können. Dieser identische Aufbau wird vor allem durch zwei Maßnahmen erreicht. Die Kontaktbelegung der Anschlußstecker für die Verbraucher und die Dimensionierung der Eingänge und Ausgänge des CAN-Knotens entsprechend dem Einbauort, der realisierten Funktionalität und der angeschlossenen Verbraucher wird so festgelegt, daß alle nötigen Signale zur Verfügung stehen und nicht zu viele Reserveleitungen offenbleiben.

Jeder CAN-Knoten enthält die kompletten Programme für alle Einsatzfälle, wobei dann durch eine Kodierung, abhängig vom Einbauort, die jeweils passende Software ausgeführt wird. Die Kodierung kann am Anschlußstecker zur zentralen Verteilereinheit hin erfolgen. Durch die Entwicklung eines universell im System verwendbaren CAN-Knotens, der die Aufgaben der Energieverteilung, des CAN-Bus-Repeater sowie das Schalten und Überwachen der Verbraucher übernimmt, ist es möglich, auch einfache konventionelle Verbraucher zu verwenden. Weiterhin ist es zum Anschluß von Standard-CAN-Bus-Komponenten an den CAN-Bus möglich, einen universellen CAN-Bus-Adapter vorzusehen, über den auch mehrere Standard-CAN-Bus-Komponenten gemeinsam angeschlossen werden können.

Im folgenden werden anhand der beigefügten Zeichnungen Ausführungsbeispiele der Erfindung näher erläutert.

In den Zeichnungen zeigen:
Die Fig. 1 bis 3 in Blockschaltbildern Systeme zur Übertragung von elektrischen Signalen und elektrischer Energie nach dem Stand der Technik;
Fig. 4 in einem Prinzipschaltbild ein System zur Übertragung von elektrischen Signalen und elektrischer Energie innerhalb eines militärischen Fahrzeugs nach der Erfindung;
Fig. 5 in Teildarstellung die zentrale Verteilereinheit des Systems nach Fig. 4;
Fig. 6 einen an die zentrale Verteilereinheit nach Fig. 4 und 5 angeschlossenen CAN-Knoten mit angeschlossenen Verbrauchern;
Fig. 7 mehrere an die zentrale Verteilereinheit angeschlossene universelle CAN-Knoten, die identisch aufgebaut sind;
Fig. 8 einen an die zentrale Verteilereinheit angeschlossenen CAN-Bus-Adapter zum Anschluß einer Standard CAN-Buskomponente;
Fig. 9 ein Datenaustauschschema zwischen den Komponenten eines Systems nach den Fig. 4 bis 8.

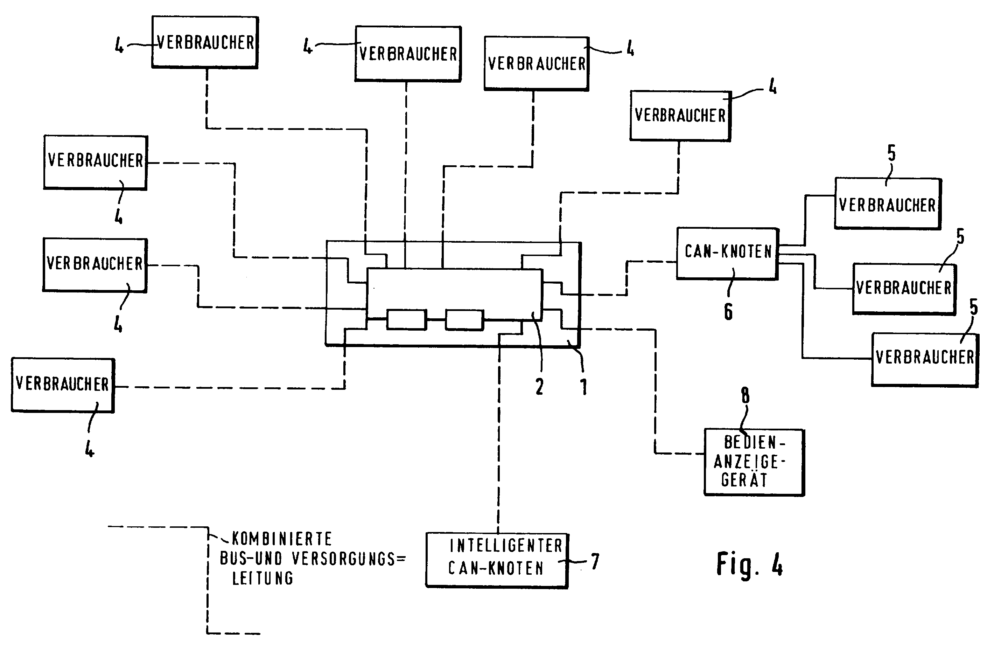

Fig. 4 zeigt ein System zur Übertragung von elektrischen Signalen und elektrischer Energie innerhalb eines militärischen Fahrzeugs mit einer zentralen Verteilereinheit 1, in der ein als gestrecktes Element ausgebildeter CAN-Bus 2 angeordnet ist. An die zentrale Verteilereinheit 1 sind über strichpunktiert angedeutete kombinierte Bus- und Versorgungsleitungen eine Reihe von Verbrauchern 4 direkt angeschlossen, während andere Verbraucher 5 über einen CAN-Knoten 6 angeschlossen sind. Weiterhin sind an die zentrale Verteilereinheit 1 ein intelligenter CAN-Knoten 7 zur Steuerung der Betriebsartenlogik und zur Fehlerlokalisierung sowie ein Bedien-Anzeige-Gerät 8 angeschlossen. Die zentrale Verteilereinheit 1 dient zur Energie- und Datenverteilung auf die sternförmig angeordneten Verbraucher 4 bzw. 5. Die zentrale Verteilereinheit 1 enthält außer dem CAN-Bus 2 die an diesen angeschlossenen Repeater 2.1 bis 2.n, an welche weiter unten näher erläuterte universelle CAN-Knoten 6.1, 6.2, 6.3 bis 6.n angeschlossen sind, sowie ein ebenfalls weiter unten näher erläuterter universeller CAN-Bus-Adapter 16. Weiterhin erfolgt von einer Energieversorgungseinrichtung 9 aus mit einer Verteilungsleitung 9.1 die Energieversorgung der einzelnen angeschlossenen Komponenten. Die Übertragung der Daten und der Energie von der zentralen Verteilereinheit 1 auf die Komponenten erfolgt über kombinierte Bus- und Versorgungsleitungen.

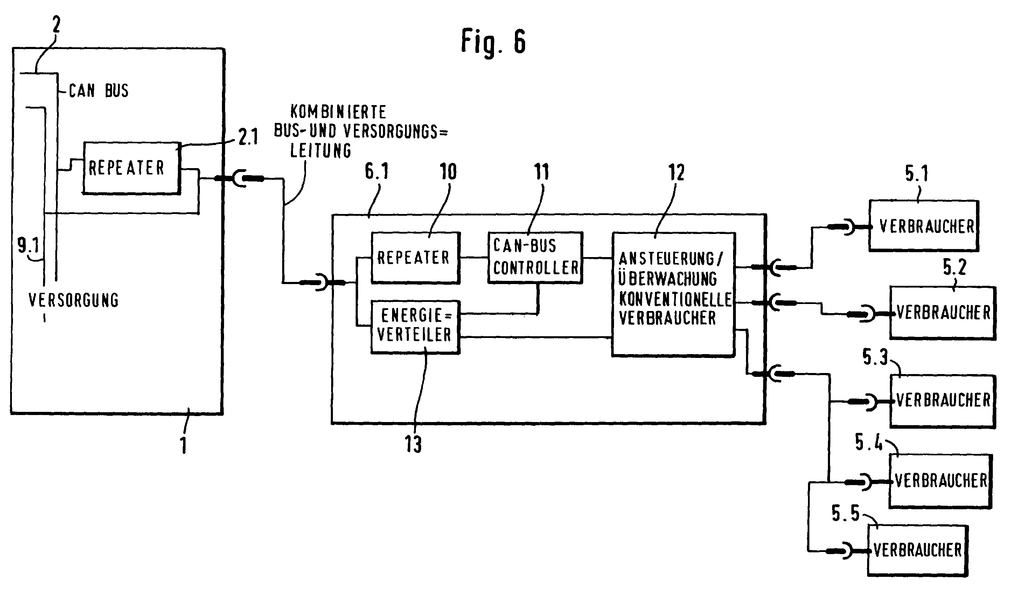

Fig. 6 zeigt einen der an die zentrale Verteilereinheit 1 angeschlossenen universellen CAN-Knoten 6.1 mit den an diesen CAN-Knoten angeschlossenen Verbrauchern 5.1 bis 5.5.

Der universelle CAN-Knoten dient zur Integration von konventionellen, einfachen Verbrauchern in das Konzept des vorliegenden Übertragungssystems. Der Knoten besteht aus einem Repeater 10, einem CAN-Bus-Controller 11, einer Ansteuerungs/Überwachungs-Einheit für konventionelle Verbraucher 12 und einem Energieverteiler 13. Er besitzt einen Anschluß zur zentralen Verteilereinheit 1, mit der er über die kombinierte Bus- und Versorgungsleitung verbunden ist, sowie mehrere Anschlüsse für die Versorgung und Steuerung der Verbraucher 5.1 bis 5.5. Der CAN-Knoten 6.1 ist in unmittelbarer Nähe der Verbraucher 5.1 bis 5.5 angeordnet, so daß die Verkabelung zu diesen Verbrauchern einfach gehalten werden kann. Dabei ist es, wie angedeutet möglich, mehrere Verbraucher 5.3, 5.4 und 5.5 über ein gemeinsames, Abzweigungen aufweisendes Kabel mit dem CAN-Knoten 6.1 zu verbinden.

Der CAN-Bus-Controller besteht aus dem CAN-Bus-Interface, einem Mikro-Controller und den notwendigen Programm- und Datenspeichern. Auf diesem Controller läuft die Software für die Kommunikation über den CAN-Bus, die Ansteuerung und Überwachung der Verbraucher sowie die Kommunikation über eine Bridge zu den angeschlossenen intelligenten Verbrauchern. Eine Bridge ermöglicht den Anschluß weiterer intelligenter Verbraucher mit seriellen Schnittstellen an das DV-System. Sie besteht aus zwei seriellen Schnittstellen. Der Ausgang der Bridge ist auf einen Anschlußstecker des CAN-Knoten aufgelegt. Die Ansteuerungs-Überwachungseinheit 12 für konventionelle Verbraucher enthält integrierte Highside-Schalter die gleichzeitig die Schalt- die Absicherungs- und die Überwachungsfunktion übernehmen. Damit kann das Prüfsystem ohne zusätzlichen Hardwareaufwand realisiert werden. Es stehen Schalter für verschiedene Leistungsklassen zur Verfügung. Die Ein- und Ausgänge sind in geeigneter Weise auf die Anschlußstecker des CAN-Knotens verteilt. Der Repeater 10 paßt die langen Stichleitungen des CAN-Bus-Systems an. Energieverteiler 13 versorgt die einzelnen Komponenten des CAN-Knotens und dient als Energieverteiler für die angeschlossenen Verbraucher.

Durch den sternförmigen Aufbau des Gesamtsystems müssen die Busleitungen nicht mehr von einem Teilnehmer zum nächsten durch das gesamte Fahrzeug gezogen werden. Sie können vielmehr in die sowie schon vorhandenen Versorgungsleitungen für die einzelnen Komponenten integriert werden. Dadurch wird der Verkabelungsaufwand erheblich reduziert. Durch die Möglichkeit der gemeinsamen Führung der Bus- und der Versorgungsleitungen über einen Stecker reduziert sich auch der Aufwand für die elektromechanischen Anteile der Komponente wesentlich.

Der CAN-Knoten ist zugleich auch als Verteiler zum Anschluß der konventionellen Verbraucher ausgelegt, der bei bekannten Systemen sowieso notwendig gewesen wäre. Somit entsteht auch hier kein Mehraufwand.

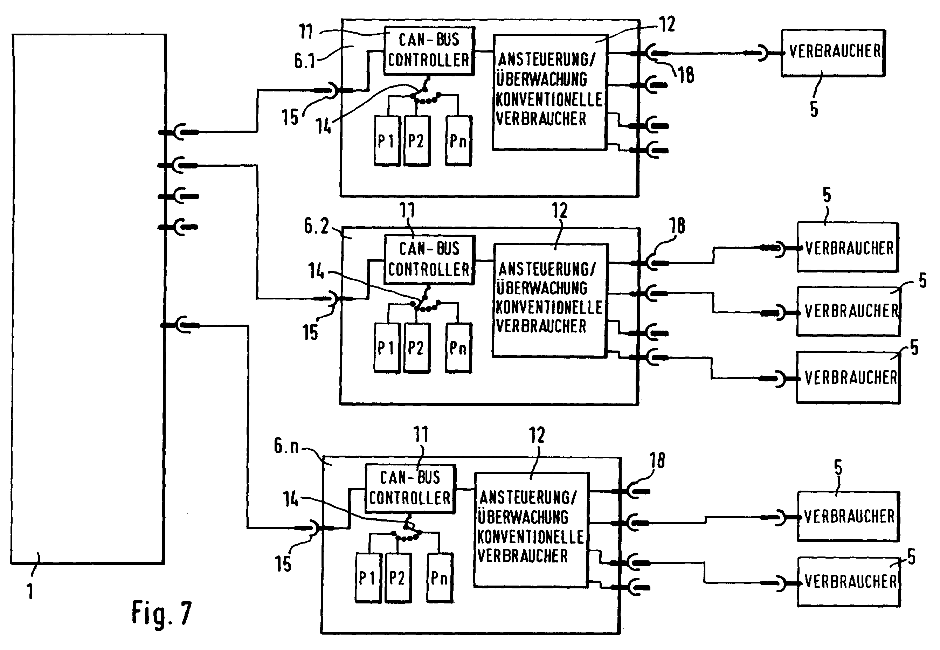

Im folgenden wird anhand von Fig. 7 ein weiterer Vorteil des beschriebenen Übertragungssystems erläutert.

Fig. 7 zeigt mehrere universelle CAN-Knoten 6.1, 6.2 bis 6.n, welche an die zentrale Verteilereinheit 1 angeschlossen sind. Diese CAN-Knoten sind alle völlig identisch aufgebaut. Von den in Fig. 6 angegebenen Einzelteilen sind zur Vereinfachung der Darstellung in Fig. 7 nur der CAN-Bus-Controller 11 und die Ansteuerungs-Überwachungseinheit 12 für konventionelle Verbraucher dargestellt. Jeder CAN-Knoten 6.1, 6.2 bis 6.n enthält die kompletten Programme P1, P2 bis Pn für alle vorgesehenen Einsatzfälle, die über Schaltelemente 14 dem CAN-Bus-Controller 11 zugeführt werden. Die Kodierung erfolgt in nicht eigens dargestellter Weise an den Anschlußsteckern 15 zur zentralen Verteilereinheit 1.

Weiterhin ist in nicht eigens dargestellter Weise die Kontaktbelegung der Anschlußstecker 18 für die Verbraucher 5 und Dimensionierung der Eingänge und Ausgänge der CAN-Knoten 6.1, 6.2 bis 6.n entsprechend den vorgesehenen Einbauorten, der realisierten Funktionalität und der angeschlossenen Verbraucher so festgelegt, daß alle nötigen Signale zur Verfügung stehen und nicht zu viele Reserveleitungen offen bleiben.

Diese Ausbildung hat zur Folge, daß alle CAN-Knoten 6.1, 6.2 bis 6.n jederzeit gegeneinander ausgetauscht werden können. Wenn beispielsweise ein CAN-Knoten, der eine oder mehrere sehr wichtige Verbraucher ansteuert, durch Fremdeinwirkung ausfällt, kann an seiner Stelle ein anderer CAN-Knoten, der weniger wichtige Verbraucher steuert, aus der Schaltung herausgenommen und an dieser Stelle eingesetzt werden.

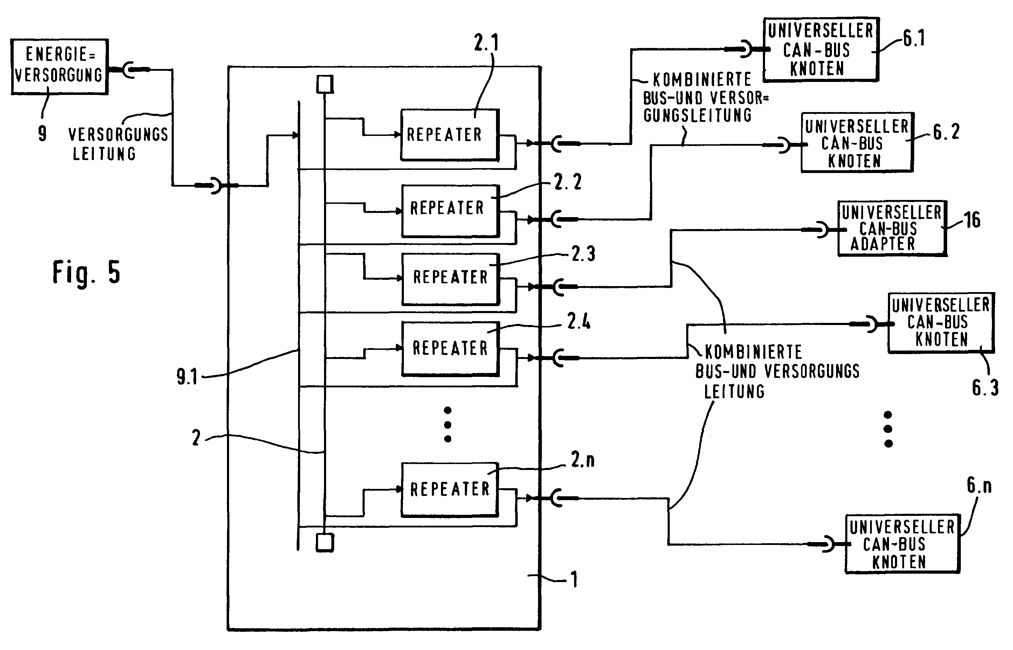

Um an das anhand der Fig. 4 bis 7 dargestellte System auch Standard CAN-Bus-Komponenten, wie sie aus der KFZ-Technik bekannt sind, anschließen zu können, ist ein universeller CAN-Bus-Adapter 16 (siehe auch Fig. 5) vorgesehen, der über eine kombinierte Bus- und Versorgungsleitung an den Repeater 2.3 in der zentralen Verteilereinheit 1 angeschlossen ist. Dieser Adapter 16 besteht aus einem Repeater 16.1 und einem Energieverteiler 16.2. Der Adapter 16 besitzt einen Anschluß 16.3 zur zentralen Verteilereinheit 1 und mehrere Anschlüsse 16.4 bzw. 16.5 für den CAN-Bus und die Versorgung der jeweiligen Standard CAN-Bus-Komponente 17. Die Anpassung zu den verschiedenen Komponenten erfolgt über die Verkabelung. Der Adapter 16 ist in unmittelbarer Nähe der jeweiligen Komponente 17 angebracht, so daß die Verkabelung zu diesen Komponenten möglichst einfach gehalten werden kann. An den Adapter 16 können in nicht dargestellter Weise auch Geräte mit mehreren CAN-Bus-Komponenten angeschlossen werden. Die in den verschiedenen Komponenten des beschriebenen Systems integrierten Repeater können in üblicher und an sich bekannter Weise aufgebaut sein.

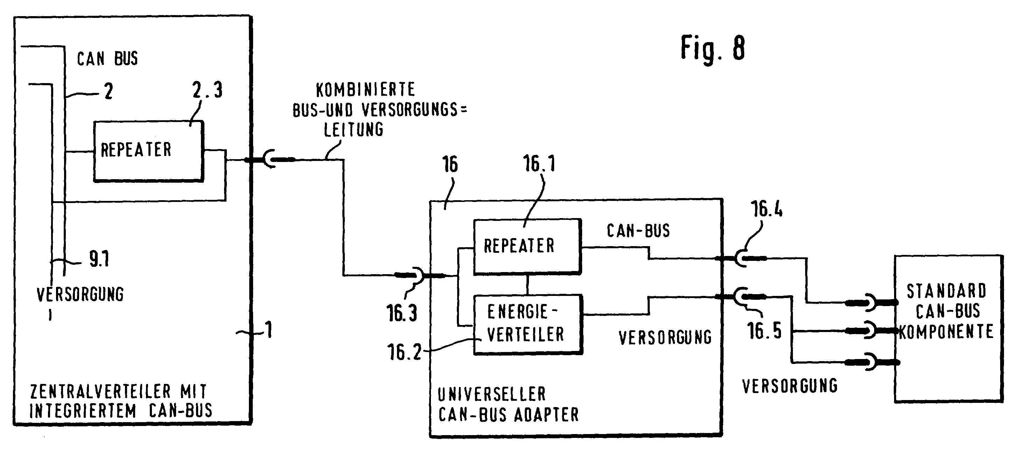

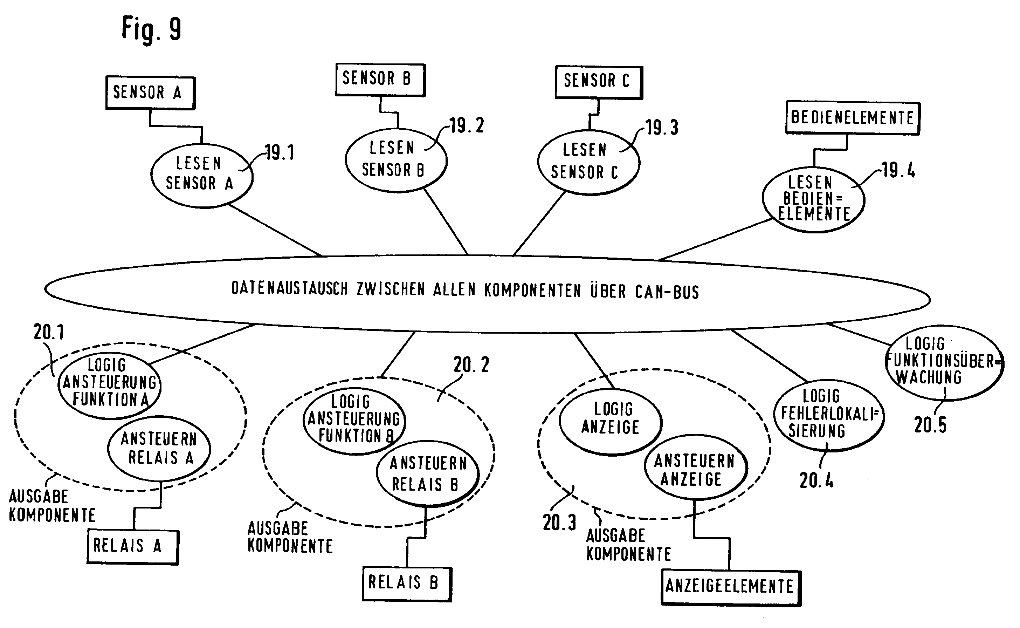

Im folgenden wird anhand eines in Fig. 9 dargestellten Funktionsschemas die Möglichkeit erläutert, mittels des anhand der Fig. 4 bis 8 beschriebenen Systems einen Datenaustausch zwischen allen Komponenten des Systems über den CAN-Bus zu realisieren.

Bei dieser Anwendungsart gibt es keine zentrale Steuerung mehr, welche die Betriebsarten kontrollieren würde. Es wird unterschieden zwischen Eingabe-Komponenten, welche Meldungen erzeugen und Ausgabe-Komponenten, welche Funktionen im System auslösen.

Eingabe-Komponenten sind beispielsweise Leseeinheiten 19.1, 19.2, 19.3, 19.4, welche die Daten der angeschlossenen Geber, beispielsweise Sensor A, Sensor B, Sensor C und der Bedienelemente einlesen und ihre Informationen über den Bus an alle anderen Komponenten senden.

Ausgabe-Komponenten sind intelligente Komponenten 20.1 bis 20.5, die vom Bus nur die für sie relevanten Informationen empfangen, diese verarbeiten und dann beispielsweise Relais A, Relais B oder Anzeigeelemente ansteuern oder sonstige Funktionen im System, wie Fehlerlokalisierung 20.4 oder Funktionsüberwachung 20.5 auslösen.

Diese Betriebsweise hat den Vorteil einer hohen Zuverlässigkeit, da beim Ausfall eines der Knoten nur die betreffende Teilfunktion gestört ist. Der CAN-Bus wird nur wenig belastet, da nur die Daten der Sensoren übertragen werden. Die Software-Struktur ist zwangsweise modular und wiederverwendbar und die Software-Struktur einer Funktion einfach und überschaubar.

## Patentansprüche

1. System zur prozessorgesteuerten Übertragung von elektrischen Signalen und elektrischer Energie innerhalb eines militärischen Fahrzeugs, bei dem mehrere Verbraucher über ein Bus-System und eine zentrale Verteilereinheit miteinander und mit einer zentralen Energieversorgungseinheit verbunden sind, dadurch gekennzeichnet, daß das Bus-System (2) in die zentrale Verteilereinheit (1) integriert ist, über welche auch die Energieversorgung erfolgt und die Verbraucher (4, 5) sternförmig über kombinierte Daten- und Versorgungsleitungen an das Bus-System (2) angeschlossen sind.

2. System nach Anspruch 1, dadurch gekennzeichnet, daß ein Teil der Verbraucher (5) jeweils über ein gemeinsames Knotenelement (6) an das Bus-System (2) angeschlossen ist.

3. System nach Anspruch 1 oder 2, dadurch gekennzeichnet, daß als Bus-System ein CAN-Bus (2) dient, der als gestrecktes Element in der zentralen Verteilereinheit (1) angeordnet ist, während die Verbraucher (4, 5) über Datenleitungen, die im gleichen Kabel wie die Versorgungsleitungen enthalten sind, an den CAN-Bus (2) angeschlossen sind.

4. System nach Anspruch 2 und 3, dadurch gekennzeichnet, daß als Knotenelement ein CAN-Knoten (6, 6.1) dient, der einen Energieverteiler (13), einen Repeater (10) sowie Steuereinheiten (12) enthält.

5. System nach Anspruch 4, dadurch gekennzeichnet, daß mindestens ein Teil der im System enthaltenen CAN-Knoten (6.1, 6.2 ... 6.n) einschließlich in bezug auf die Belegung der Kontakte ihrer Anschlußstecker (15, 18) identisch aufgebaut sind.

6. System nach Anspruch 5, dadurch gekennzeichnet, daß jeder der identisch aufgebauten CAN-Knoten (6.1, 6.2 ... 6.n) die kompleten Programme (P1 bis Pn) für alle vorgegebenen Einsatzfälle enthält und das jeweils auszuführende Programm in Abhängigkeit vom Einsatzort des CAN-Knotens (6.1, 6.2 ... 6.n) durch eine entsprechende Kodierung abrufbar ist.

7. System nach Anspruch 6, dadurch gekennzeichnet, daß die Kodierung am Anschlußstecker (15) zur zentralen Verteilereinheit (1) erfolgt.

8. System nach einem der Ansprüche 4 bis 7, dadurch gekennzeichnet, daß bei mindestens einem Teil der CAN-Knoten (6.1) die Anpassung an die angeschlossenen Verbraucher (5.3, 5.4, 5.5) über ein Abzweigungen aufweisendes, gemeinsames Kabel erfolgt.

9. System nach Anspruch 3 und gegebenenfalls einem der Ansprüche 4 bis 8, dadurch gekennzeichnet, daß zum Anschluß von Standard-CAN-Bus-Komponenten (17) an den CAN-Bus (2) ein CAN-Bus-Adapter (16) dient, der einen mit einem Versorgungsausgang (16.5) verbundenen Energieverteiler (16.2) sowie einen mit dem zur Standard-CAN-Bus-Komponente (17) führenden Daten-Ein/Ausgang (16.4) verbundenen Repeater (16.1) aufweist.

10. System nach Anspruch 9, dadurch gekennzeichnet, daß mehrere Standard-CAN-Bus-Komponenten über einen gemeinsamen CAN-Bus-Adapter angeschlossen sind.
